# FASCICULE DE BREVET EUROPEEN

(11) **EP 2 320 596 B1**
(45) Date de publication et mention de la délivrance du brevet: **20.08.2014**
(21) Numéro de dépôt: 10189102.6
(22) Date de dépôt: 27.10.2010
(51) Int. Cl.: H04L 9/06

(54) **Protection d'une clé de chiffrement contre des attaques unidirectionnelles**
Sicherung eines Verschlüsselungsschlüssels gegen einseitige Angriffe
Protection of a cryptographic key against uniderectional attacks

(30) Priorité: 04.11.2009 FR 0957783
(43) Date de publication de la demande: 11.05.2011
(73) Titulaire: STMicroelectronics (Rousset) SAS, 13790 Rousset (FR)
(72) Inventeur: Liardet, Pierre-Yvan, 13790, PEYNIER (FR); Marinet, Fabrice, 13790, CHATEAUNEUF LE ROUGE (FR); Tournemille, Jérome, 83910, POURRIERES (FR)
(74) Mandataire: Thibon, Laurent

(56) Documents cités:
- DE-A1-102004 062 825
- FR-A1- 2 867 635
- LAURIE GENELLE ET AL: "Securing AES Implementation against Fault Attacks", FAULT DIAGNOSIS AND TOLERANCE IN CRYPTOGRAPHY (FDTC), 2009 WORKSHOP ON, IEEE, PISCATAWAY, NJ, USA, 6 septembre 2009 (2009-09-06), pages 51-62, XP031627633, ISBN: 978-1-4244-4972-9

## Description

### Domaine de l'invention

La présente invention concerne de façon générale les circuits électroniques et, plus particulièrement, les unités de traitement de données mettant en oeuvre des algorithmes de chiffrement ou de déchiffrement. L'invention concerne plus particulièrement les mécanismes de protection d'une ou plusieurs clés manipulées par de tels algorithmes. En particulier, l'invention s'applique à la détection d'une perturbation unidirectionnelle de bits d'une telle clé.

### Exposé de l'art antérieur

Lorsque l'on utilise une unité de traitement (typiquement un cryptoprocesseur) pour mettre en oeuvre un algorithme de chiffrement, on cherche à vérifier que la clé manipulée n'est pas modifiée (accidentellement ou volontairement), soit lors de son transfert vers le cryptoprocesseur depuis un circuit externe, soit une fois dans celui-ci alors qu'elle est contenue dans un registre spécifique de ce cryptoprocesseur. Les attaques visant à perturber l'état d'un bit d'un registre du cryptoprocesseur sont généralement des attaques utilisant un laser pointé sur un ou plusieurs bits du registre contenant la clé ou ses dérivés afin d'en perturber la valeur.

Pour contrer une modification lors du transfert, une solution est de recharger la clé dans le cryptoprocesseur le plus souvent possible, généralement à chaque nouveau chiffrement, ou périodiquement. Toutefois, le registre de clé du cryptoprocesseur reste sensible aux attaques par laser.

Pour vérifier l'intégrité de la clé une fois qu'elle est dans le cryptoprocesseur, le plus simple serait de lire cette clé pour la contrôler à l'extérieur du cryptoprocesseur. Cependant, pour protéger la clé contre d'éventuelles tentatives de piratage, l'élément de mémorisation temporaire (registre) qui contient la clé n'est généralement accessible depuis l'extérieur du cryptoprocesseur qu'en écriture. La vérification d'intégrité consiste alors à vérifier la cohérence de résultats obtenus par deux calculs distincts utilisant la clé contenue dans le cryptoprocesseur. Ces deux calculs sont soit deux chiffrements d'un même message avec la clé, soit un chiffrement suivi d'un déchiffrement.

Mais, les résultats d'un mécanisme de vérification d'intégrité peuvent renseigner un attaquant sur la valeur des bits de la clé. Par exemple, si un des bits de la clé est modifié dans le registre de clé et que les ancienne et nouvelle valeurs de ce bit sont les mêmes, le mécanisme de vérification est incapable de s'en apercevoir, que la vérification soit directe (par relecture) ou indirecte (par deux calculs distincts). Cela rend la clé vulnérable à une attaque ou perturbation connue sous le nom de perturbation unidirectionnelle, qui consiste à forcer un bit de la clé vers une seule des valeurs possibles. Par exemple, le bit attaqué est forcé à 0 quel que soit son état (1 ou 0) initial. Le forçage d'un bit dans un seul des deux états peut permettre à un attaquant de déterminer la valeur de ce bit selon que son attaque est ou non détectée (si elle n'est pas détectée, c'est que le bit de la clé a la valeur de forçage - si elle l'est, c'est que le bit de la clé a l'autre état). La répétition de cette attaque sur chaque bit de la clé permet d'obtenir sa valeur.

De plus, une attaque unidirectionnelle peut être effectuée sur plusieurs bits d'un registre simultanément, par exemple en utilisant plusieurs faisceaux laser dirigés vers plusieurs cellules du registre. L'attaque cible des registres utilisés dans les calculs. Les contremesures sont donc relatives aux registres utilisés qui, selon l'algorithme peuvent ne contenir qu'une partie du message et/ou de la clé.

### Résumé

Le document FR 2 867 635 A1 (OBERTHUR CARD SYST SA [FR]; 16 septembre 2005) divulgue un schéma de protection d'une clé cryptographique contre des attaques unidirectionnelles par perturbation des données, mise en oeuvre par un circuit électronique dans un algorithme symétrique de chiffrement ou de déchiffrement d'un message, comportant les étapes de sélectionner une paire de masques aléatoires différents, exécuter deux fois l'algorithme en appliquant, à la clé ou au message, l'un des masques de la paire à chaque exécution, et vérifier la cohérence entre les deux exécutions.

Il serait souhaitable de disposer d'un mécanisme de protection de la valeur d'une clé manipulée par un circuit de chiffrement, qui pallie tout ou partie des inconvénients des mécanismes de vérification d'intégrité usuels.

Il serait également souhaitable de détecter une perturbation unidirectionelle simultanée de plusieurs bits d'une clé, sans pour autant rendre la clé vulnérable.

Pour atteindre tout ou partie de ces objets ainsi que d'autres, il est prévu un procédé de protection d'une clé mise en oeuvre, par un circuit électronique, dans un algorithme symétrique de chiffrement ou de déchiffrement d'un message, comportant les étapes de :
sélectionner de façon non déterministe une paire de masques différents dans un ensemble d'au moins quatre masques différents, les masques ayant la propriété de représenter des combinaisons de bits différentes, au moins par paire de bits ;
exécuter deux fois l'algorithme en appliquant, à la clé ou au message, l'un des masque de la paire sélectionnée à chaque exécution ; et
vérifier la cohérence entre les deux exécutions.

Selon un mode de réalisation de la présente invention, les masques sont sélectionnés de façon non déterministe, par paires de masques dans un ensemble d'au moins deux paires de masques différentes, les masques ayant la propriété qu'une combinaison de type Ou-Exclusif des masques d'une même paire donnant un résultat où tous les bits sont dans un même état.

Selon un mode de réalisation de la présente invention, la sélection du masque de la paire affectée à chaque exécution est aléatoire.

Selon un mode de réalisation de la présente invention, l'algorithme est exécuté par itérations successives d'opérations identiques, parmi lesquelles au moins une fonction non linéaire.

Selon un mode de réalisation de la présente invention, chaque masque est appliqué au message, des sous-clés affectées à chaque itération étant générées en faisant intervenir le masque concerné, de façon à démasquer le message avant application de la fonction non linéaire.

Selon un mode de réalisation de la présente invention, l'algorithme utilisé est le DES ou une de ses variantes.

Selon un mode de réalisation de la présente invention, les deux exécutions sont effectuées séquentiellement.

Selon un mode de réalisation de la présente invention, les deux exécutions sont effectuées en parallèle.

Selon un mode de réalisation de la présente invention, les deux exécutions sont des chiffrements, le résultat d'une des exécutions étant combiné avec le masque affecté à l'autre exécution avant l'étape de vérification.

Selon un mode de réalisation de la présente invention, les deux exécutions sont un chiffrement et un déchiffrement.

On prévoit également un circuit électronique adapté pour la mise en oeuvre du procédé ci-dessus.

On prévoit également un système incluant un circuit électronique de chiffrement ou de déchiffrement et un circuit électronique de traitement des données chiffrées ou de données déchiffrées, adapté pour la mise en oeuvre de ce procédé.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique d'une carte à puce du type à laquelle s'applique à titre d'exemple la présente invention ;
la figure 2 est un schéma bloc d'un système utilisant une unité de chiffrement/déchiffrement de type cryptoprocesseur ;
la figure 3 est un schéma bloc partiel d'un circuit intégrant une unité de chiffrement/déchiffrement et une unité centrale de traitement ;
les figures 4A et 4B sont des schémas blocs illustrant un exemple d'algorithme de chiffrement et de déchiffrement auquel appliquer une vérification d'intégrité ;
la figure 5 illustre, de façon très schématique et sous forme de blocs, un mode de réalisation du mécanisme de protection ;
la figure 6 illustre, de façon très schématique et sous forme de blocs, un autre mode de réalisation du mécanisme de protection ;
la figure 7 illustre un mode de mise en oeuvre d'une itération de l'algorithme de chiffrement du mécanisme de la figure 5 ou 6 ;
la figure 8 représente un exemple de génération de sous-clés pour l'algorithme de la figure 7 ;
la figure 8A est un détail de la figure 8 ;
la figure 9 illustre un autre mode de mise en oeuvre d'une itération de l'algorithme de chiffrement selon un autre mode de réalisation du mécanisme de protection ; et
la figure 9A est un détail de la figure 9.

### Description détaillée

De mêmes éléments ont été désignés par de mêmes références aux différentes figures. Par souci de clarté, seuls les étapes et éléments utiles à la compréhension de l'invention ont été représentés et seront décrits. En particulier, l'exploitation faite des données à chiffrer ou des données chiffrées n'a pas été détaillée, l'invention étant compatible avec toute exploitation usuelle. De plus, les éléments de l'unité de traitement cryptographique ou des autres circuits n'ont pas été détaillés, l'invention étant là encore compatible avec les structures habituelles. On fera par la suite référence au terme chiffrement pour désigner, sauf précision contraire, un chiffrement et/ou un déchiffrement qui sont des mécanismes similaires (application d'un algorithme à des données et une ou plusieurs clés).

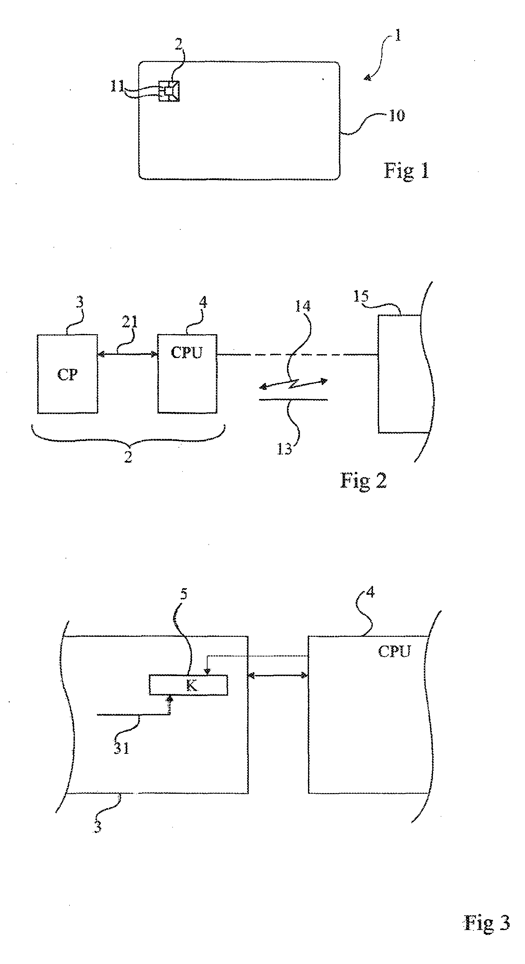

La figure 1 est une représentation schématique d'une carte à puce 1 du type à laquelle s'appliquent à titre d'exemple les modes de réalisation qui vont être décrits. Une telle carte 1 est constituée d'un support 10 par exemple en matière plastique qui porte ou inclut un ou plusieurs circuits intégrés 2. Le ou les circuits 2 sont susceptibles de communiquer avec l'extérieur de la carte (par exemple, avec un terminal de lecture ou de lecture-écriture) à l'aide de contacts 11 ou par des éléments d'émission-réception sans contact (non représentés) à la manière d'un transpondeur électromagnétique. Le ou les circuits 2 incluent au moins une unité de chiffrement (généralement appelée cryptoprocesseur) capable d'exécuter des calculs de chiffrement et/ou de déchiffrement à partir d'une ou plusieurs clés chargées dans l'unité de traitement.

L'utilisation d'algorithmes de chiffrement trouve de nombreuses applications dans l'industrie électronique, qu'il s'agisse des systèmes à carte à puce, des systèmes de télévision à péage, des systèmes de communications chiffrées, etc. Dans tous les cas, on retrouve une unité de traitement algorithmique capable de mettre en oeuvre des mécanismes de chiffrement et/ou de déchiffrement.

La figure 2 est une représentation sous forme de blocs d'un système utilisant un cryptoprocesseur 3 (CP). Ce cryptoprocesseur est un circuit intégré considéré comme inviolable et qui met en oeuvre un ou plusieurs algorithmes de chiffrement ou de déchiffrement appliqués à des données qu'il reçoit de l'extérieur, en utilisant une ou plusieurs clés qu'il contient ou qu'il reçoit de l'extérieur. Le cryptoprocesseur 3 est, par exemple, susceptible de communiquer avec une unité de traitement 4 (par exemple une unité centrale de traitement-CPU) d'un circuit 2 intégrant les deux éléments 3 et 4 (et généralement d'autres circuits non représentés tels que des mémoires volatiles et non, une interface d'entrée-sortie, etc.). Le circuit 2 est capable de communiquer par liaison filaire 13 ou par liaison sans fil 14 avec un dispositif séparé 15, par exemple, un circuit d'exploitation des données chiffrées ou déchiffrées.

La figure 3 est un détail du schéma de la figure 2 faisant apparaître, dans le circuit 3, un élément de mémorisation temporaire interne 5 (typiquement un registre) de stockage de la clé de chiffrement. Bien entendu, l'unité 3 comporte généralement plusieurs registres pour stocker temporairement les données chiffrées, à chiffrer et autres variables, ainsi que d'autres éléments lui permettant d'exécuter l'algorithme de chiffrement (logique câblée, mémoires, unité de traitement d'instructions logicielles, etc.). On désignera par la suite le registre 5, registre de clé. Le cas échéant, l'unité 3 contient plusieurs registres de clé. Le contenu du registre 5 est lu par le cryptoprocesseur 3 (liaison 31) à chaque fois qu'il a besoin de la clé pour une opération de chiffrement ou de déchiffrement.

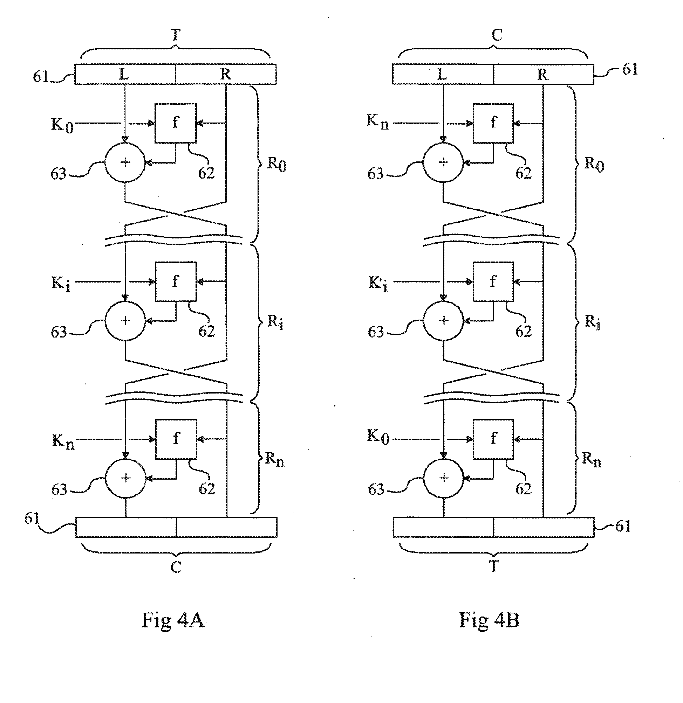

Les figures 4A et 4B illustrent respectivement, sous forme de blocs, l'architecture d'algorithmes de chiffrement et de déchiffrement du type auquel s'applique, à titre d'exemple, la protection.

Les algorithmes concernés sont des algorithmes dits de Feistel. De tels algorithmes effectuent un chiffrement symétrique, par blocs, et se caractérisent par des opérations de chiffrement et de déchiffrement similaires, voire identiques, ne nécessitant qu'une inversion de l'ordre d'utilisation de clés (ou sous-clés) extraites de la clé contenue dans le registre de clé. Le plus souvent, les réseaux ou schémas de Feistel combinent plusieurs itérations ou tours (rounds) d'opérations identiques incluant une fonction de diffusion (par exemple, une permutation des bits), une fonction non linéaire (par exemple, de type substitution) produisant un effet de confusion, et un mélange linéaire utilisant une combinaison bit à bit (Ou-Exclusif bit à bit).

Un exemple d'algorithme de Feistel utilisable est l'algorithme DES (Data Encryption Standard) et ses différentes variantes.

L'opération de chiffrement (figure 4A) consiste à soumettre un message à chiffrer T (plain text) à des opérations successives. Le message T est séparé en deux parties de tailles identiques (désignées arbitrairement, partie droite R et partie gauche L). Ce message est contenu dans un registre 61 du circuit 3 (ou dans deux registres respectivement affectés aux parties droite et gauche). L'algorithme s'effectue en n+1 tours Ri (i étant compris entre 0 et n>1). A chaque tour, la partie droite R du registre 61 est soumise (bloc 62) à une fonction non linéaire f avec une sous-clé Ki (i compris entre 0 et n). Cette sous-clé est obtenue à partir d'une clé de chiffrement globale (typiquement, la clé K contenue dans le registre 5 - figure 3). Le résultat de la fonction de chiffrement est mélangé (bloc 63, addition bit à bit modulo 2 ou combinaison Ou-Exclusif bit à bit) avec la partie gauche L du registre qui correspond au résultat du tour précédent (du message T pour le premier tour R₀). Enfin, les parties droite R et gauche L sont permutées pour le tour suivant. A la fin du n^{ième} tour, on obtient le message chiffré C. Le dernier tour Rₙ ne comporte généralement pas de permutation des parties droite et gauche. Le message C est généralement contenu dans le registre 61 ayant servi durant tout le calcul. La même cellule de calcul (fonction 62 et combineur 63) peut être utilisée pour chaque tour.

L'opération de déchiffrement (figure 4B) consiste à soumettre un message chiffré C (ciphered text) aux n tours Ri mais en utilisant les sous-clés dans un ordre inverse (commencer par la clé Kₙ pour finir par la clé K₀), afin d'obtenir le message en clair T.

Dans le cas de l'algorithme DES, le premier tour est précédé d'une opération de mélange des bits (permutation) et le dernier tour est suivi de l'opération inverse.

Lorsque l'on applique un mécanisme de vérification d'intégrité consistant à comparer deux chiffrements successifs ou parallèles ou à effectuer un chiffrement, suivi d'un déchiffrement, le résultat de cette vérification constitue une faiblesse face à des perturbations unidirectionnelles, en particulier quand ces attaques sont sur plusieurs bits. Une attaque unidirectionnelle sur deux bits consiste à effectuer deux attaques successivement en forçant simultanément deux bits du registre de clé dans un même état, puis un bit dans un état et l'autre dans l'état opposé. Cela revient donc à diviser l'attaque en deux partitions. Si les deux bits de la clé sont identiques et que la perturbation n'est pas détectée, cela signifie que l'état de ces deux bits est celui (par exemple 11) vers lequel ils ont été forcés. Si la perturbation est détectée, cela signifie soit que les deux bits sont dans l'autre état (00), soit qu'ils sont dans des états différents l'un de l'autre (01 ou 10). La deuxième partition consiste à forcer l'un des bits dans un état (par exemple, à 0) et l'autre dans l'état opposé (par exemple, 1). Si la perturbation n'est pas détectée, les états sont déterminés (01). Si la perturbation est détectée, cela signifie soit que les deux bits sont dans un même état (00), soit que les états sont différents mais inversés (10) par rapport à ceux dans lesquels ils ont été forcés. Il ne reste donc qu'un cas d'incertitude : celui où les deux partitions ont conduit à une détection de violation d'intégrité par le circuit.

En reproduisant l'attaque par paire de bits pour tous les bits de la clé, toutes les paires ayant un même bit commun (par exemple le premier ou le dernier), cette incertitude peut être levée. Par exemple, en dirigeant la perturbation sur le premier bit de l'attaque précédente et sur un troisième bit, on peut être en mesure de déterminer non seulement l'état de ce troisième bit, mais également de lever l'incertitude éventuelle sur les précédents. En reprenant l'exemple d'états pris ci-dessus pour la première attaque, si la première partition de la deuxième attaque n'est pas détectée, cela signifie que les premier et troisième bits sont à l'état 1. Si les deux partitions de la première attaque avaient été détectées, alors le deuxième bit est à l'état 0. La deuxième partition de la deuxième attaque peut alors être omise. Si la première partition (de la deuxième attaque) est détectée, et que les deux partitions de la première attaque avaient été détectées, il faut exploiter la deuxième partition.

Si la deuxième partition de la deuxième attaque n'est pas détectée, cela signifie que le premier bit est dans l'état 0 et que le troisième bit est à l'état 1. Si les deux partitions de la première attaque avaient été détectées, alors le deuxième bit est à l'état 0. Si la deuxième partition de la deuxième attaque est détectée, cela signifie que les premier et troisième bits sont soit 00 soit 10. Le troisième bit vaut donc 0. Si une incertitude existait suite à la première attaque, elle ne peut pas encore être levée. Toutefois en poursuivant les attaques en réutilisant toujours le premier bit dans les paires, l'incertitude sera levée dès que l'autre bit de la paire vaudra 1.

Ainsi, à la fin de l'attaque sur tous les bits appariés, l'attaquant connaît la clé.

Une autre possibilité pour réaliser une attaque unidirectionnelle sur deux bits consiste à traiter les bits par paires successives sans bit commun. Dans ce cas, les incertitudes éventuelles sont levées en changeant les états de l'attaque appliquée aux paires de bits.

Ce type d'attaque est envisageable sur plus de deux bits en augmentant le nombre de partitions des attaques.

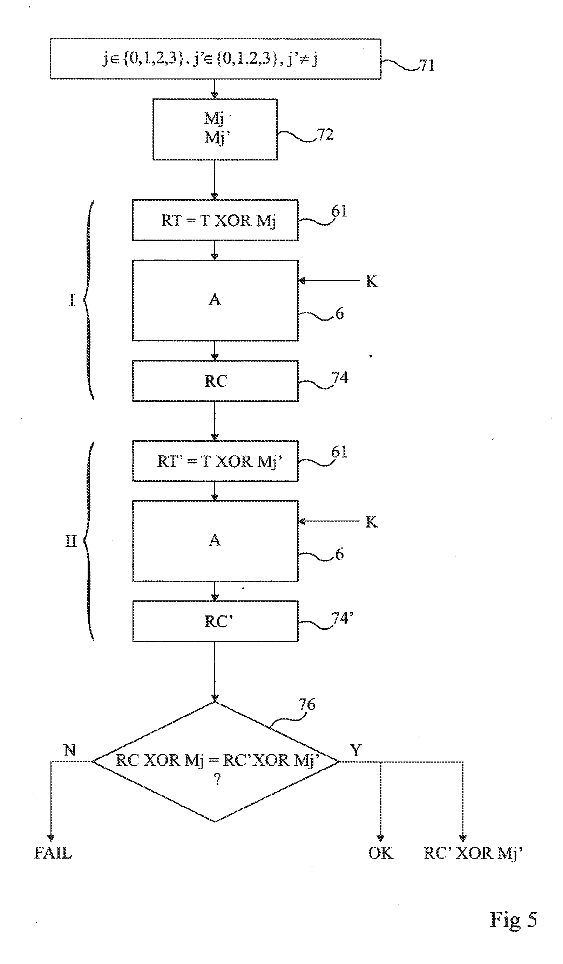

La figure 5 est un schéma bloc d'un mode de réalisation préféré d'un mécanisme de vérification d'intégrité d'une clé K, protégé contre une perturbation unidirectionnelle, par paire de bits de la clé.

Deux applications de l'algorithme sont effectuées successivement ou en parallèle en appliquant, à la clé ou au message, deux masques sélectionnés aléatoirement dans un ensemble d'au moins quatre masques.

On appelle "masque" un mot comportant un même nombre de bits que l'élément à masquer (par exemple, 64 bits pour la clé du DES). L'opération de masquage consiste à combiner par un Ou-Exclusif bit à bit le mot à masquer et le masque. Pour simplifier, on exprimera par la suite les masques de façon hexadécimale et sur seulement deux caractères si tous les caractères du masques sont identiques, ou sur les caractères à respecter sur toute la longueur du masque (par exemple, FF pour FF.....FF, 05FA pour 05FA.....05FA).

Les masques sont choisis pour que chaque masque représente, pour chaque groupe de bits correspondant à la granularité de masquage choisie, l'une des valeurs possibles de la combinaison de bits. Par exemple, pour une granularité de deux bits, on utilise au moins quatre masques qui, par paire de bits, représentent chacun l'une des quatre combinaisons possibles. Pour une granularité sur trois bits, on utilisera au moins huit masques qui, par triplet de bits, représentent chacun l'une des huit combinaisons possible. La granularité choisie pour le masque est fonction du nombre de bits d'attaque unidirectionnelle contre lequel on souhaite se protéger. L'invention sera décrite par la suite en relation avec un exemple de quatre masques avec une granularité de deux bits pour protéger contre des attaques unidirectionnelles sur deux bits. Par exemple, les masques pourront être 00, FF, 55 et AA. On pourrait aussi prendre des masques 05FA, F5A0, 5A0F et A0F5.

Dans l'exemple de la figure 5, on suppose l'utilisation de quatre masques. Un tirage non déterministe (aléatoire ou pseudo aléatoire) est effectué (bloc 71, j ∈ R{0, 1, 2, 3}, j'∈ R{0, 1, 2, 3}, j'≠j) entre quatre valeurs (par exemple 0, 1, 2, 3) pour sélectionner la paire Mj et Mj' de masques avec laquelle vont être effectuées les étapes de vérification. Ce tirage est tel que les deux indices j et j' sont différents l'un de l'autre.

Deux applications I et II de l'algorithme A (bloc 6) sont effectuées successivement en utilisant le premier masque Mj puis le deuxième masque Mj'.

On suppose que le message T est présent dans un registre 61. Le contenu de ce registre est modifié pour obtenir un texte masqué RT correspondant à la combinaison Ou-Exclusif du message T avec le masque Mj (RT = T XOR Mj). Dans l'algorithme DES, le même masque doit être appliqué sur la partie droite et sur la partie gauche du message. Dans l'exemple de la figure 5, on suppose que l'application I, par le cryptoprocesseur 3, de l'algorithme A au message T s'effectue dans un registre 61 et que son application II au message T masqué par le second masque Mj' (RT' = T XOR Mj') s'effectue dans le même registre. Dans ce cas, le premier résultat RC obtenu est transféré dans un registre 74 avant la deuxième application de l'algorithme dont le résultat RC' est, le cas échéant, transféré dans un registre 74'. En variante, des registres différents sont utilisés pour les deux calculs I et II, ce qui évite le transfert des résultats.

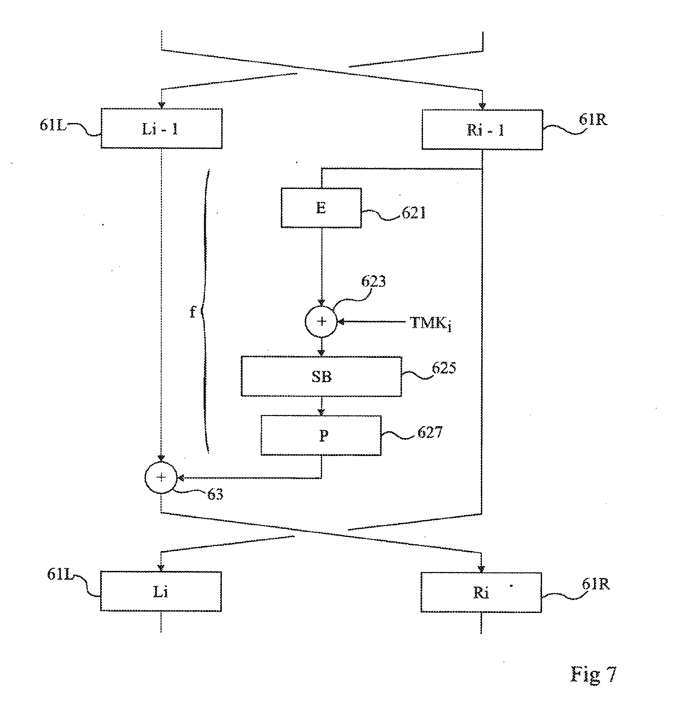

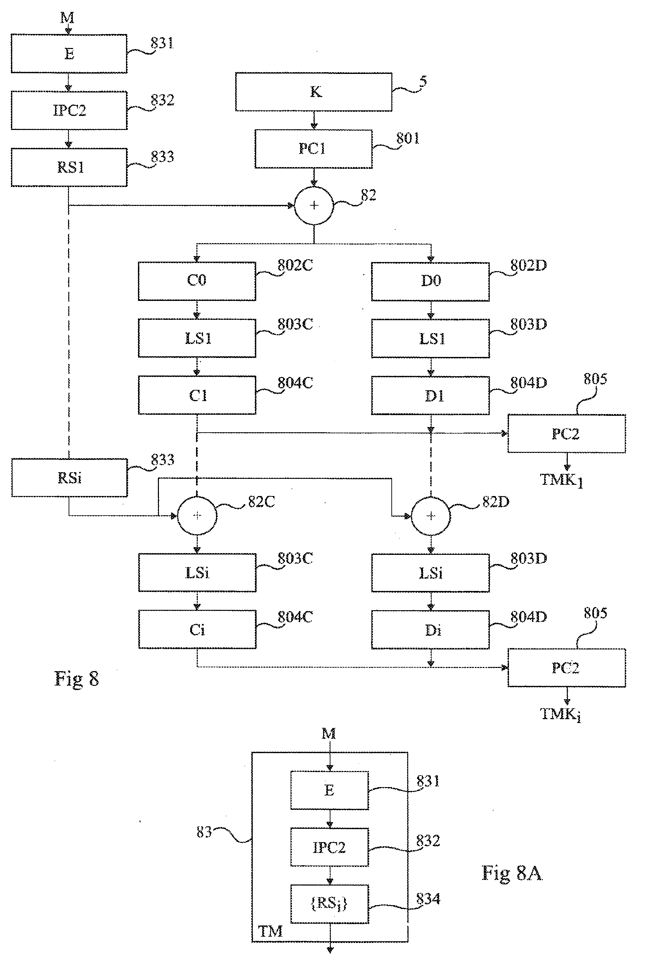

Le masquage du message conduit à intervenir sur (masquer) la génération des sous-clés (ou clés de tour) à partir de la clé K, ce qui sera exposé plus loin en relation avec la figure 7, 8 et 8A.

Pour être en mesure de vérifier la cohérence entre les deux résultats RC et RC', leurs valeurs démasquées RC XOR Mj et RC' XOR Mj' sont comparées l'une à l'autre (bloc 76, RC XOR Mj = RC' XOR Mj' ?). Le démasquage peut intervenir au moment de la comparaison ou, en amont, à la fin de l'application de l'algorithme.

Si la comparaison 76 valide la vérification (OK, sortie Y du bloc 76), le résultat (RC' XOR MJ') qui peut être sorti du cryptoprocesseur (placé dans un élément de mémorisation interne, accessible en lecture par l'unité centrale 2 ou autre circuit utilisant le processeur 3) est dans un quelconque des registres 74 et 74' et a été vérifié.

Dans le cas contraire (FAIL, sortie N du bloc 76), on détecte un défaut d'intégrité de la clé, c'est-à-dire une modification d'au moins un bit de celle-ci entre les deux exécutions de l'algorithme. La comparaison est, de préférence, effectuée par le cryptoprocesseur. Un défaut d'intégrité est utilisé pour empêcher le résultat chiffré de sortir du cryptoprocesseur, ou entreprendre toute autre action appropriée en cas de suspicion de modification de la clé accidentelle ou volontaire (attaque).

En variante, si les deux exécutions I et II sont effectuées en parallèle (donc en même temps), quatre registres doivent être utilisés pour les variables RT, RT' et pour les clés.

Lorsqu'un attaquant cible une attaque par perturbation unidirectionnelle sur deux bits du registre de clé, la détection de faute susceptible de le renseigner va indiquer une faute qui dépend de la paire de masques utilisée. L'analyse des partitions de la détection lui fournit un résultat, mais grâce au choix aléatoire des masques, ce résultat est erroné.

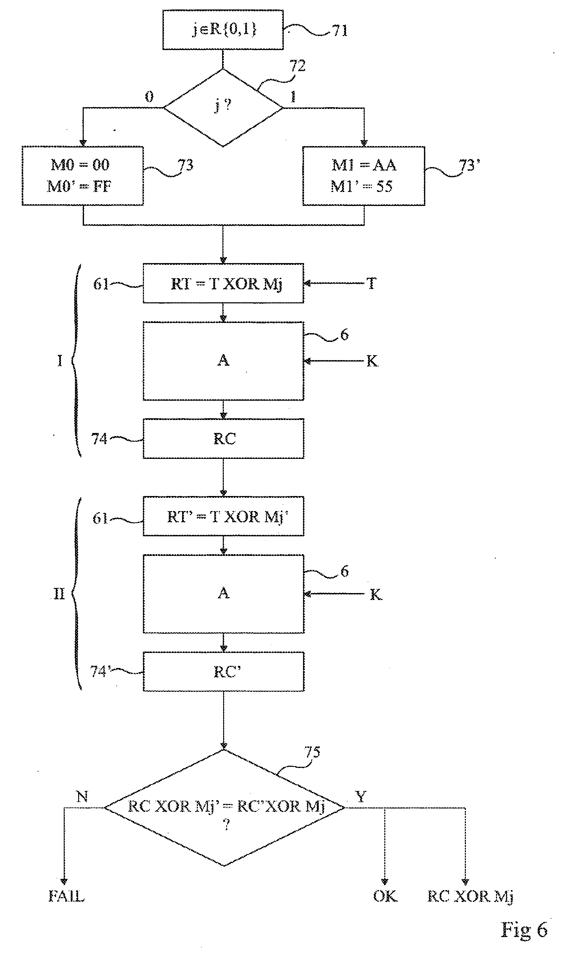

La figure 6 illustre un autre mode de réalisation du mécanisme de protection dans lequel, par rapport au mode de réalisation de la figure 5, les masques sont appliqués par paires prédéfinies, sélectionnées aléatoirement dans un ensemble d'au moins quatre masques. En d'autres termes, on constitue un ensemble d'au moins deux paires de masques et, à chaque exécution du mécanisme de vérification, on sélectionne aléatoirement l'une des deux paires pour appliquer chacun des masques à l'une des deux exécutions.

Dans cet exemple, les paires de masques sont choisies pour que la combinaison Ou-Exclusif des deux masques d'une même paire ne donne que des bits à l'état 0 ou que des bits à l'état 1.

Dans l'exemple de la figure 6, on suppose l'utilisation de quatre masques. Un tirage non déterministe (aléatoire ou pseudo aléatoire) est effectué (bloc 71, j ∈ R{0, 1}) entre deux valeurs (par exemple 0, 1) pour sélectionner la paire de masques avec laquelle vont être effectuées les étapes de vérification.

Selon l'état 0 ou 1 du bit j de sélection (bloc 72, j ?), une première paire (bloc 73, M0, M0') ou une deuxième paire (bloc 73', M1, M1') de masques est sélectionnée. Dans l'exemple de la figure 5, on suppose que les masque M0 et M0' valent respectivement 00 et FF et que les masques M1 et M1' valent respectivement 55 et AA.

Comme dans le mode de réalisation de la figure 5, deux applications I et II de l'algorithme A (bloc 6) sont effectuées successivement en utilisant le premier masque Mj (texte masqué RT correspondant à la combinaison Ou-Exclusif du message T avec le masque Mj - bloc 61, RT = T XOR Mj), puis le deuxième masque Mj' (texte masqué RT' correspondant à la combinaison Ou-Exclusif du message T avec le masque Mj' - bloc 61, RT' = T XOR Mj').

La cohérence entre les résultats RC et RC' des applications I et II est vérifiée en appliquant le masque Mj au résultat RC' et le masque Mj' au résultat RC (bloc 75, RC XOR Mj' = RC' XOR Mj ?). Le résultat RC XOR MJ est fournit si le test 75 confirme la cohérence des deux calculs.

De préférence, dans le mode de réalisation de la figure 6, l'ordre des exécutions I et II (dans une exécution séquentielle) ou des registres contenant les variables RT et RT' (dans une exécution en parallèle par deux cellules de calcul) est sélectionné aléatoirement. Cela améliore l'efficacité du mécanisme de protection.

La figure 7 représente le détail de la fonction f (bloc 62) d'un tour de l'algorithme DES. Comme indiqué précédemment, le registre 61 contenant le message en cours de chiffrement est partagé en une partie droite 61R et une partie gauche 61L. La figure 7 illustre le cas d'un tour de rang i. Avant ce tour, les parties droite et gauche contiennent respectivement les résultats Rᵢ₋₁ et Lᵢ₋₁ du tour précédent (après croisement). La partie droite Rᵢ₋₁ est soumise à la fonction f de l'algorithme. Une première transformation consiste en une expansion 621 (E) de la taille du mot (par exemple de 32 à 48 bits). Puis le résultat est mélangé (Ou-Exclusif 623) avec la sous clé Kᵢ. Toutefois, pour que la fonction de l'algorithme DES soit respectée, la sous-clé démasque le résultat de la combinaison pour que l'opération non-linéaire suivante s'effectue sur des données non masquées. Cela est symbolisé par l'application d'une sous-clé TMKᵢ dont l'obtention sera décrite en relation avec les figures 8 et 8A. Une fois la combinaison 623 effectuée, le résultat (E(Rᵢ₋₁) XOR TMKᵢ) est soumis à une table de substitution 625 ou Sbox (SB), suivi d'une permutation 627 (P). Le résultat de la permutation est combiné 63 avec la partie gauche (Lᵢ₋₁) du registre. Cette combinaison 63 réintroduit le masquage. Puis, le résultat de la combinaison est chargé en partie droite du registre tandis que la partie droite issue du tour précédent est chargée dans la partie gauche 61R. Ces parties droite (Li) et gauche (Ri) sont alors soumises au tour suivant.

Hormis le fait que les données (message et clé) tiennent compte du masque correspondant à l'exécution, les étapes décrite en relation avec la figure 7 sont les étapes habituelles du DES. On peut par exemple se référer au document "Federal Information Processing Standards Publication 46-3" du 25 octobre 1999 décrivant le DES.

Les figures 8 et 8A illustrent un exemple de génération des sous-clés TMKᵢ exploitées par les itérations décrites en figure 7.

La clé K contenue dans le registre 5 est d'abord soumise à une première permutation de bits PC1 (bloc 801).

Dans un processus usuel, la clé est séparée en deux parties gauche C0 et droite D0 (blocs 802C et 802D), puis chaque partie est soumise à un décalage circulaire vers la gauche (blocs 803C et 803D). Le nombre de bits de décalage circulaire (0, 1 ou 2 pour le DES) dépend du rang i du tour concerné. Les résultats C1 et D1 (blocs 804C et 804D) son concaténés puis soumis à une deuxième permutation de bits PC2 (bloc 805) pour fournir la première sous clé.

Pour fournir les sous-clés suivantes, les parties gauche Cᵢ₋₁ et droite Dᵢ₋₁ sont soumises aux décalages circulaires 803C et 803D et les résultats Ci et Di sont soumis à la permutation PC2 pour fournir la sous-clé de rang i.

Dans le mode de réalisation des figures 5 et 6, la sous-clé doit participer à démasquer le message avant application des tables de substitution 625. Pour simplifier, on fera référence à un masque M. La sous clé fournie TMK₁ doit donc avoir la valeur K₁ XOR E(M). Dans l'exemple de la figure 8, le résultat de la première permutation 801 est combiné par un Ou-Exclusif 82 avec une fonction TM appliquée au masque M. Cette fonction TM comprend successivement une expansion E (bloc 831) du masque M, une permutation circulaire inverse 832 (IPC2) réalisant l'inverse de la deuxième permutation PC2 et un décalage vers la droite (bloc 833, RS1) d'un nombre de bits identique au nombre de bits prévu pour le décalage vers la gauche 803C et 803D. Le résultat RS(IPC2(E(M))) est combiné avec la valeur PC1(K) issue du bloc 801.

Pour les tours suivants de rang i, la fonction TM 83 (figure 8A) est similaire mais comprend un nombre de décalages circulaires vers la droite fonction du rang du tour. En fait le nombre de décalages correspond à la somme des décalages effectués jusqu'au tour concerné inclus (bloc 834, {RSi}). Le résultat de la fonction 83 est combiné par parties gauche et droit par un Ou-Exclusif 82C, 82D aux contenues Cᵢ₋₁ et Dᵢ₋₁ du tour de clé précédent, avant d'être soumis au décalage circulaire vers la gauche 803C et 803D (LSi).

On voit que la clé TMKᵢ, modifiée par la fonction TM, vaut Ki XOR E(M). Combinée (bloc 623, figure 7) avec la valeur E(Rᵢ₋₁ XOR M) issue du bloc 621, on obtient bien la partie droite démasquée et combinée à la clé (Ki XOR E(Rᵢ₋₁)).

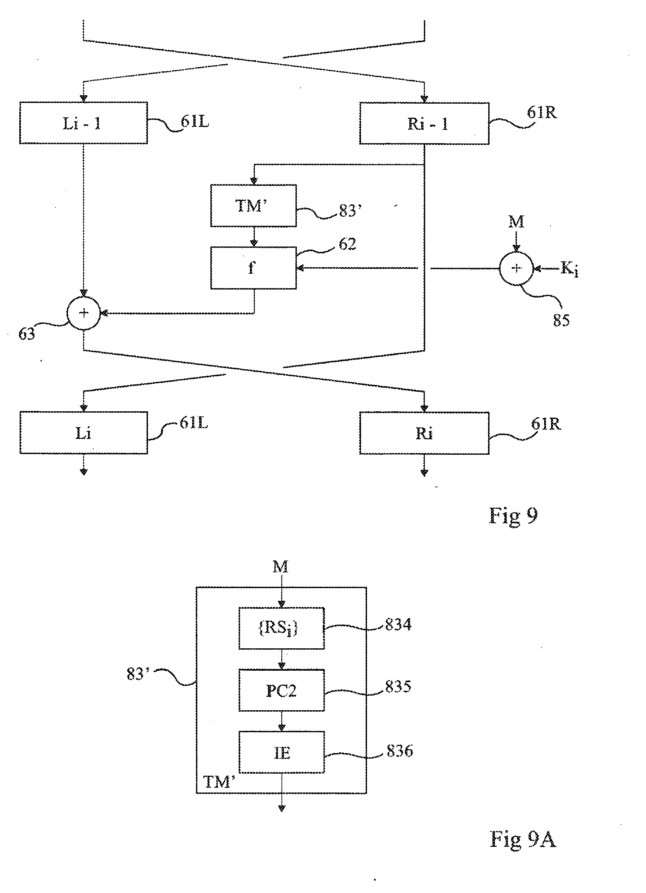

Les figures 9 et 9A représentent un autre mode de réalisation selon lequel le masquage avec le masque M ou M' est appliqué à la clé K et non au message T. La figure 9 est à rapprocher de la figure 8 et la figue 9A est à rapprocher de la figure 8A.

La partie droite Rᵢ₋₁ de chaque tour est soumise à une fonction TM' (bloc 83') avant application de la fonction f pour que le masquage de la clé de tour Ki avec le masque M (combinaison Ou-Exclusif 85) soit ôté avant l'application de la table de substitution de la fonction f (bloc 62). Comme l'illustre la figure 9A, la fonction TM consiste à appliquer un nombre de décalages circulaires vers la droite RSi (bloc 834) fonction du rang du tour, puis une permutation PC2 (bloc 835) équivalente à la deuxième permutation PC2 du mécanisme de génération des sous-clés et enfin l'expansion inverse de E, notée IE (bloc 836). En entrée de la fonction f du rang i, la partie droite est donc représentée par IE(PC2({RSi(Rᵢ₋₁)})).

Le fonctionnement ultérieur se déduit de celui exposé en relation avec le mode de réalisation précédent.

Selon une variante de réalisation, plutôt que de vérifier l'identité entre les résultats RC et RC" de deux applications successives I et II de l'algorithme, on effectue un chiffrement suivi d'un déchiffrement en appliquant l'un des masque de la paire au chiffrement et l'autre au déchiffrement. Deux alternatives correspondant aux exécutions I et II sont alors possibles. On peut appliquer le DES au message T masqué avec le masque Mj en masquant également la clé K avec le masque Mj, puis appliquer le DES inverse au résultat obtenu préalablement masqué avec Mj XOR Mj' et en masquant la clé avec le masque Mj', ou appliquer le DES au message T masqué avec le masque Mj' en masquant également la clé K avec le masque Mj', puis appliquer le DES inverse au résultat obtenu préalablement masqué avec Mj' XOR Mj et en masquant la clé avec le masque Mj.

Les mécanismes de protection proposés sont compatibles avec les structures usuelles des cryptoprocesseurs et n'en demandent aucune modification. En particulier, il est toujours possible de choisir entre une vérification parallèle ou série et de partager la cellule de calcul.

On peut s'apercevoir de l'efficacité d'un tel mécanisme de protection en modifiant, après le chargement de la clé dans le cryptoprocesseur ou à chaque chargement de cette clé, deux bits du registre de clé ou du registre contenant le message. Si ce mécanisme a été mis en oeuvre, l'application de la clé obtenue par l'attaque ne permet pas le chiffrement. Dans le cas contraire, l'attaque unidirectionnelle à deux bits fournit la clé.

Un intérêt supplémentaire de la vérification effectuée est qu'elle vérifie l'exécution même de l'algorithme de chiffrement. En effet, si une erreur se produit pendant l'exécution de l'algorithme, les résultats ne concorderont pas.

D'autre part, grâce à la sélection aléatoire des masques et, préférentiellement, de l'ordre des applications de l'algorithme, le pirate ne peut pas déterminer l'état d'origine de la clé car la perturbation unidirectionnelle aura lieu avec une équiprobabilité pour chaque bit de la clé.

Différents modes de réalisation ont été décrits. Différentes variantes et modifications sont à la portée de l'homme du métier. En particulier, le choix entre une exécution parallèle ou série (exécutions successives) dépend en pratique d'un compromis entre rapidité de traitement et encombrement du cryptoprocesseur. De plus, la mise en oeuvre pratique est à la portée de l'homme du métier à partir des indications fonctionnelles données ci-dessus, que ce soit pour une mise en oeuvre logicielle ou matérielle. En outre, si l'invention a été décrite en relation avec l'algorithme DES, elle s'applique plus généralement à des algorithmes symétriques respectant les mêmes propriétés. Enfin, bien que l'invention ait été décrite avec un exemple utilisant quatre masques, le nombre de masques n'est pas limité.

## Revendications

1. Procédé de protection d'une clé (K) mise en oeuvre, par un circuit électronique, dans un algorithme symétrique (A) de chiffrement ou de déchiffrement d'un message (T), comportant les étapes de :
sélectionner (71) de façon non déterministe une paire de masques différents (Mj, Mj') dans un ensemble d'au moins quatre masques différents, les masques de chaque paire ayant la propriété de représenter des combinaisons de bits différentes, au moins par paire de bits ;
exécuter deux fois (I, II) l'algorithme en appliquant, à la clé ou au message, l'un des masque de la paire sélectionnée à chaque exécution ; et
vérifier (75, 76) la cohérence entre les deux exécutions.

2. Procédé selon la revendication 1, dans lequel les masques sont sélectionnés (71) de façon non déterministe, par paires de masques (Mj, Mj') dans un ensemble d'au moins deux paires de masques différentes, les masques ayant la propriété qu'une combinaison de type Ou-Exclusif des masques d'une même paire donnant un résultat où tous les bits sont dans un même état.

3. Procédé selon la revendication 2, dans lequel la sélection du masque de la paire affectée à chaque exécution est aléatoire.

4. Procédé selon l'une quelconque des revendications 1 à 3, dans lequel l'algorithme est exécuté par itérations successives d'opérations identiques (f), parmi lesquelles au moins une fonction non linéaire (SB).

5. Procédé selon la revendication 4, dans lequel chaque masque (Mj, Mj') est appliqué au message (T), des sousclés (Kᵢ) affectées à chaque itération (i) étant générées en faisant intervenir le masque concerné, de façon à démasquer le message avant application de la fonction non linéaire.

6. Procédé selon l'une quelconque des revendications 1 à 5, dans lequel l'algorithme utilisé est le DES ou une de ses variantes.

7. Procédé selon l'une quelconque des revendications 1 à 6, dans lequel les deux exécutions (I, II) sont effectuées séquentiellement.

8. Procédé selon l'une quelconque des revendications 1 à 6, dans lequel les deux exécutions (I, II) sont effectuées en parallèle.

9. Procédé selon l'une quelconque des revendications 1 à 8, dans lequel les deux exécutions (I, II) sont des chiffrements, le résultat d'une des exécutions étant combiné (75) avec le masque affecté à l'autre exécution avant l'étape de vérification (76).

10. Procédé selon l'une quelconque des revendications 1 à 8, dans lequel les deux exécutions sont un chiffrement et un déchiffrement.

11. Circuit électronique adapté pour la mise en oeuvre du procédé conforme à l'une quelconque des revendications 1 à 10.

12. Système incluant un circuit électronique (3) de chiffrement ou de déchiffrement et un circuit électronique (2) de traitement des données chiffrées ou de données déchiffrées, adapté pour la mise en oeuvre du procédé conforme à l'une quelconque des revendications 1 à 10.

## Patentansprüche

1. Ein Verfahren zum Schützen eines Schlüssels (K), der durch eine elektronische Schaltung in einem symmetrischen Algorithmus (A) implementiert wird zum Verschlüsseln oder Entschlüsseln einer Nachricht (T), wobei das Verfahren die folgenden Schritte aufweist:
Auswählen (71) in einer nicht-deterministischen Art und Weise eines Paars von unterschiedlichen Masken (Mj, Mj') aus einem Satz von wenigstens vier unterschiedlichen Masken, wobei die Masken jedes Paars die Eigenschaft besitzen, dass sie unterschiedliche Bitkombinationen repräsentieren und zwar wenigstens durch Paare von Bits;
Durchführen des Algorithmus zweimal (I, II) durch Anlegen von einer der Masken des ausgewählten Paars während jeder Ausführung an den Schlüssel oder an die Nachricht;
Überprüfen (75, 76) der Konsistenz zwischen den zwei Ausführungen.

2. Verfahren nach Anspruch 1, wobei die Masken in einer nicht-deterministischen Art und Weise ausgewählt (71) sind, durch Paare von Masken (Mj, Mj') aus einem Satz von wenigstens zwei unterschiedlichen Paaren von Masken, wobei die Masken die Eigenschaft besitzen, dass eine XOR-artige Kombination der Masken eines selben Paars ein Ergebnis vorsieht, bei dem alle Bits in einem gleichen Zustand sind.

3. Verfahren nach Anspruch 2, wobei die Auswahl der Maske des Paars, welche jeder Ausführung zugewiesen ist, zufällig ist.

4. Verfahren nach einem der Ansprüche 1 bis 3, wobei der Algorithmus ausgeführt wird durch aufeinanderfolgende Iterationen von identischen Operationen (f) von denen wenigstens eine, eine nichtlineare Funktion (SB) ist.

5. Verfahren nach Anspruch 4, wobei jede Maske (Mj, Mj') an die Nachricht (T) angelegt wird, wobei Unterschlüssel (Kᵢ), die jeder Iteration (i) zugewiesen sind erzeugt werden durch Verwendung der betreffenden Maske, zum Demaskieren der Nachricht vor dem Anlegen der nichtlinearen Funktion.

6. Verfahren nach einem der Ansprüche 1 bis 5, wobei der verwendete Algorithmus der DES-Algorithmus oder eine seiner Variationen ist.

7. Verfahren nach einem der Ansprüche 1 bis 6, wobei die zwei Ausführungen (I, II) sequentiell durchgeführt werden.

8. Verfahren nach einem der Ansprüche 1 bis 6, wobei die zwei Ausführungen (I, II) parallel ausgeführt werden.

9. Verfahren nach einem der Ansprüche 1 bis 8, wobei die zwei Ausführungen (I, II) Verschlüsselungen sind, wobei das Ergebnis einer der Ausführungen mit der Maske kombiniert wird (75), die der anderen Ausführung zugewiesen ist, und zwar vor dem Überprüfungsschritt (76).

10. Verfahren nach einem der Ansprüche 1 bis 8, wobei die zwei Ausführungen eine Verschlüsselung und eine Entschlüsselung sind.

11. Elektronische Schaltung, die in der Lage ist, das Verfahren nach einem der Ansprüche 1 bis 10 zu implementieren.

12. Ein System, das eine elektronische Verschlüsselungs- oder Entschlüsselungsschaltung (3) aufweist, und eine elektronische Schaltung (2) zum Verarbeiten verschlüsselter Daten oder entschlüsselter Daten, die in der Lage ist das Verfahren nach einem der Ansprüche 1 bis 10 zu implementieren.

## Claims

1. A method for protecting a key (K) implemented, by an electronic circuit, in a symmetrical algorithm (A) for ciphering or deciphering a message (T), comprising the steps of:
selecting (71) in non-deterministic fashion a pair of different masks (Mj, Mj') from a set of at least four different masks, the masks of each pair having the property of representing different bit combinations, at least by pairs of bits;
executing the algorithm twice (I, II) by applying, to the key or to the message, one of the masks of the pair selected at each execution;
checking (75, 76) the consistency between the two executions.

2. The method of claim 1, wherein the masks are selected (71) in non-deterministic fashion, by pairs of masks (Mj, Mj') from a set of at least two different pairs of masks, the masks having the property that an XOR-type combination of the masks of a same pair provides a result where all bits are in a same state.

3. The method of claim 2, wherein the selection of the mask of the pair assigned to each execution is random.

4. The method of any of claims 1 to 3, wherein the algorithm is executed by successive iterations of identical operations (f), among which at least one non-linear function (SB) .

5. The method of claim 4, wherein each mask (Mj, Mj') is applied to the message (T), sub-keys (Kᵢ) assigned to each iteration (i) being generated by using the concerned mask, to unmask the message before application of the non-linear function.

6. The method of any of claims 1 to 5, wherein the algorithm used is the DES algorithm or one of its variations.

7. The method of any of claims 1 to 6, wherein the two executions (I, II) are performed sequentially.

8. The method of any of claims 1 to 6, wherein the two executions (I, II) are performed in parallel.

9. The method of any of claims 1 to 8, wherein the two executions (I, II) are cipherings, the result of one of the executions being combined (75) with the mask assigned to the other execution before the checking step (76).

10. The method of any of claims 1 to 8, wherein the two executions are a ciphering and a deciphering.

11. An electronic circuit capable of implementing the method of any of claims 1 to 10.

12. A system comprising an electronic ciphering or deciphering circuit (3) and an electronic circuit (2) for processing ciphered data or deciphered data, capable of implementing the method of any of claims 1 to 10.
